# EUROPEAN PATENT SPECIFICATION

(11) **EP 4 113 647 B1**
(45) Date of publication and mention of the grant of the patent: **15.07.2026**
(21) Application number: 21861941.9
(22) Date of filing: 10.08.2021
(51) Int. Cl.: H01M 4/04, F26B 23/04, F26B 13/18, F26B 13/00, F26B 3/30, F26B 3/20, B05D 3/00, F26B 25/06, F26B 13/08, F26B 3/347, F26B 3/04, F26B 3/18, F26B 21/35

(54) **ELECTRODE DRYING DEVICE**
ELEKTRODENTROCKNUNGSVORRICHTUNG
DISPOSITIF DE SÉCHAGE D'ÉLECTRODE

(30) Priority: 24.08.2020 KR 20200106092
(43) Date of publication of application: 04.01.2023
(73) Proprietor: LG Energy Solution, Ltd., Seoul 07335 (KR)
(72) Inventor: YU, Yunah, Daejeon 34122 (KR); JEON, Jaehyoung, Daejeon 34122 (KR)
(74) Representative: Plasseraud IP
(86) International application number: PCT/KR2021/010576
(87) International publication number: WO 2022/045644

(56) References cited:
- WO-A1-2020/080229
- CN-A- 107 681 111
- CN-B- 105 103 339
- CN-U- 206 875 895
- JP-A- 2001 215 691
- JP-A- 2005 209 514
- JP-A- 2011 023 129
- JP-A- 2014 139 896
- JP-A- 2015 144 055
- JP-A- 2020 187 846
- JP-B2- H0 624 673
- KR-A- 20200 048 068

## Description

### [TECHNICAL FIELD]

### Cross Citation with Related Application(s)

This application claims the benefit of Korean Patent Application No. 10-2020-0106092 filed on August 24, 2020 in the Korean Intellectual Property Office.

The present disclosure relates to an electrode drying device, and more particularly, to an electrode drying device that dries an electrode in the battery manufacturing process, wherein the electrode drying device dries a residual moisture inside the electrode.

### [BACKGROUND]

With the increase of the technological development and demand for a mobile device, the demand for batteries as energy sources is rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

The secondary battery may be classified based on the shape of a battery case into a cylindrical battery having an electrode assembly mounted in a cylindrical metal can, a prismatic battery having an electrode assembly mounted in a prismatic metal can, and a pouch-shaped battery having an electrode assembly mounted in a pouch-shaped case made of a laminated aluminum sheet.

The secondary battery can be formed by inserting an electrode assembly composed of a positive electrode, a negative electrode, and a separator into a case, and then sealing the can. The electrode assembly can be formed by interposing a separator between the positive electrode and the negative electrode, and winding the electrode in a jelly-roll type many times or laminating it in a plurality of layers.

On the other hand, when manufacturing an electrode such as a positive electrode or a negative electrode, the secondary battery performs a process of drying the electrode.

Conventionally, in the electrode drying step, the electrode was mainly dried by vacuum drying (V/D) method. In the case of vacuum heating drying method, a pancake-shaped electrode roll is directly put into the V/D equipment to remove moisture at a high temperature, but there is a problem that the moisture deviation in the electrode roll and the drying time are large.

JP H06 24673 B2 discloses a device for continuously drying coating film of band body. JP 2011 023129 A discloses a method of manufacturing positive electrode plate for nonacqueous secondary battery, and manufacturing device therefor. WO 2020/080229 A1 discloses a hot-press apparatus. CN 105 103 339 B and CN 206 875 895 U disclose electrode drying devices according to the prior art.

### [DETAILED DESCRIPTION OF THE INVENTION]

### [Technical Problem]

It is an object of the present disclosure to provide an electrode drying device with improved drying capacity.

### [Technical Solution]

According to one aspect of the present invention, there is provided an electrode drying device as laid out in appended claim 1.

The heater may be located between the first guide roll and the heating roll located most adjacent to the first guide roll.

The hot air system may include a temperature control sensor.

The hot air system may supply hot air at a third temperature toward the electrode, and the third temperature may be equal to at least any one of the first temperature and the second temperature, or higher than at least any one of the first temperature and the second temperature.

The third temperature may be 90 degrees Celsius or more and 150 degrees Celsius or less.

The hot air system may supply hot air at a third temperature in a direction perpendicular to the traveling direction of the first path.

The heating roll may be a contact-type induction heating roll.

According to another aspect of the present invention, there is provided a method of manufacturing an electrode assembly by using the above-mentioned electrode drying device.

According to an aspect of the present disclosure, there is provided a secondary battery in which the above-mentioned electrode assembly is sealed inside a battery case together with an electrolytic solution.

### [ADVANTAGEOUS EFFECTS]

According to embodiments, the electrode drying device of the present disclosure can improve the drying capacity.

The effects of the present disclosure are not limited to the effects mentioned above, and additional other effects not described above will be clearly understood from the following detailed description and appended drawings by those skilled in the art.

### [BRIEF DESCRIPTION OF THE DRAWINGS]

Fig. 1 is a diagram showing a conventional electrode drying device; and
Fig. 2 is a diagram showing an electrode drying device according to one embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Hereinafter, a conventional electrode drying device will be described in detail.

In the conventional secondary battery, an electrode high-speed travelling drying (Roll to Roll Drying, R2R Drying) method is used in order to replace the vacuum heating and drying method. Here, in the high-speed electrode travelling drying method, the electrode surface is directly heated and/or dried while the electrode roll is travelling.

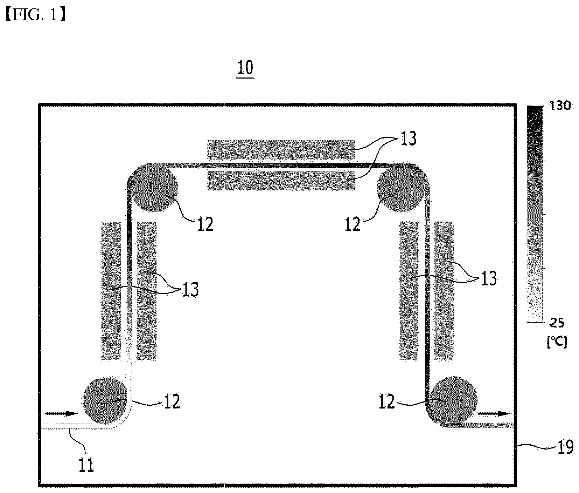

Fig. 1 is a diagram showing a conventional electrode drying device.

Referring to Fig. 1, the conventional electrode drying device 10 includes a guide roll 12 and a heater 13, and an electrode 11 is dried as it passes through the guide roll 12 and the heater 13. Also, in the electrode drying device 10, the guide roll 12 and the heater 13 are located within a chamber 19, and drying can be performed as the electrode 11 is injected and moved in and out of the chamber 19.

More specifically, the conventional electrode drying device 10 may include three heaters 13, and the electrode 11 is heated to a target temperature as it passes through each heater 13. Here, the heater 13 has large temperature fluctuations, and thus, a far-infrared (FIR) heater, which is advantageous for rapid temperature rise, is mainly used. However, the far-infrared heater has a problem that the temperature stability is lowered, which is disadvantageous for maintaining the temperature. At this time, the guide roll 12 located between the two adjacent heaters 13 does not have a separate heating means, so that the guide roll 12 has a temperature similar to room temperature. Consequently, even if the electrode 11 passes through the heater 13 and is heated to the target temperature, the electrode 11 is cooled as it passes through the guide roll 12 between the adjacent heaters 13, and has a temperature lower than the target temperature. That is, in the electrode drying device 10, the time during which the electrode 11 retains above the actual target temperature is short.

Therefore, the conventional electrode drying device 10 repeats the heating and cooling of the electrode 11, and thus, the drying efficiency may be lowered, and the moisture deviation within the electrode 11 may not be sufficiently improved. Further, since a plurality of heaters 12 are installed on the path on which the electrode 11 travels, there is a problem that the risk of fire, the manufacturing equipment cost, and the energy cost increase.

Now, an electrode drying device according to one embodiment of the present disclosure will be described.

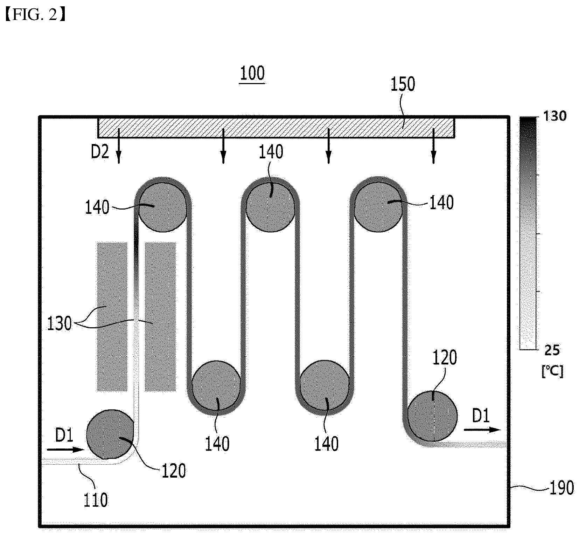

Fig. 2 is a diagram showing an electrode drying device according to one embodiment of the present disclosure.

Referring to Fig. 2, the electrode drying device 100 according to one embodiment of the present disclosure includes a guide roll 120, a heater 130, a heating roll 140, and a hot air system 150. Also, in the electrode drying device 100, the guide roll 120, the heater 130, the heating roll 140, and the hot air system 150 are located within a chamber 190, and drying can be performed as the electrode 110 is injected and moved in and out of the chamber 190.

More specifically, the electrode drying device 100 according to one embodiment of the present disclosure includes an electrode 110; a guide roll 120 that guides the moving direction of the electrode 110; a heating roll 140 that is arranged spaced apart from the guide roll 120 and is formed in at least one or more numbers; and a heater 130 that is located between the guide roll 120 and the heating roll 140 and heats the electrode 110 to a first temperature. Here, the heating roll 140 is heated to a second temperature, and provides a first path through which the electrode 110 moves together with the guide roll 120.

The electrode 110 may be either a positive electrode or a negative electrode. Here, the electrode 110 can be manufactured by coating an electrode slurry to a predetermined thickness on the current collector. In one example, when the electrode 110 is a positive electrode, the electrode 110 may be manufactured by coating a positive electrode slurry containing a positive electrode active material on a positive electrode current collector. In one example, when the electrode 110 is a negative electrode, the electrode 110 may be manufactured by coating a negative electrode slurry containing a negative electrode active material on a negative electrode current collector.

At this time, when the electrode 110 is manufactured by performing only the above-described coating step, residual moisture may exist inside the electrode 110. Further, moisture may be generated inside the electrode 110 during the process of cleaning or storing the electrode 110. In one example, the electrode slurry contained in the electrode 110 may include a solvent. Therefore, the electrode 110 needs to sufficiently remove residual moisture existing inside the electrode 110 via the electrode drying device 100.

The guide roll 120 can guide the moving direction of the electrode 110. Further, the guide roll 120 includes a first guide roll corresponding to an injection portion of the electrode 110, and a second guide roll corresponding to the entry/exit portion of the electrode 110. Therefore, the electrode drying device 100 may adjust the time during which the electrode 110 retains within the electrode drying device 100 by the guide roll 120.

The heater 130 can heat one surface or both surfaces of the electrode 110. In one example, the heater 130 may include a first heating unit and a second heating unit facing each other at the same position of the electrode 110. At this time, one surface of the electrode 110 may be heated by the first heating unit, and the other surface of the electrode 110 may be heated by the second heating unit.

The heater 130 may be located between a guide roll 120 and a heating roll 140. Consequently, the heater 130 can heat the electrode 110 injected into the electrode drying device 100. Further, the heater may be located between a first guide roll corresponding to the injection portion of the electrode 110 and a heating roll 140 in the guide roll 120. More specifically, the heater may be located between the first guide roll and the heating roll 140 located most adjacent to the first guide roll. Thereby, the heater 130 heats the electrode 110 at a position adjacent to the position where the electrode 110 is injected into the electrode drying device 100, whereby the electrode drying device 100 can increase the drying time of the electrode 110 and the residence time within the target temperature.

In one example, as the heater 130, a far-infrared (FIR) heater can be used.

Further, the heater can heat the electrode 110 to a first temperature. Here, the first temperature may be 90 degrees Celsius or more and 150 degrees Celsius or less. More preferably, the first temperature may be 95 degrees Celsius or more and 145 degrees Celsius or less. In one example, the first temperature may be 100 degrees Celsius or more and 140 degrees Celsius or less. When the first temperature is less than 90 degrees Celsius, the residual moisture contained inside the electrode 110 may not be sufficiently removed. When the first temperature exceeds 150 degrees Celsius, the electrode slurry contained inside the electrode 110 may be deteriorated by heat, or at least a part of the electrode 110 may be damaged.

In one example, the heating roll 140 may be a contact-type induction heating roll.

The heating roll 140 can come into contact with the electrode 110. Further, the heating roll 140 can come into contact with one surface of the electrode 110. More specifically, the heating roll 140 can come into contact with one surface of the electrode 110 heated to the first temperature. Further, the heating roll 140 can guide the moving direction of the electrode 110 and, at the same time, may transfer heat to the electrode 110 in contact with the heating roll 140 to induce heating. Therefore, heating of the electrode 110 is induced by the heating roll 140, whereby the electrode drying device 100 may not include a separate heater other than the heater 130 for heating the electrode 110 to the first temperature.

The electrode drying device 100 according to the present embodiment includes the heating roll 140, and thus can solve the problems of fire risk, the manufacturing equipment cost, and the energy cost increase due to the inclusion of a plurality of heaters. Further, in the process of moving the electrode 110, it may not be cooled to less than the first temperature, and thus, the electrode drying device 100 may reduce moisture deviation inside the electrode 110, as compared with the conventional electrode drying device 10.

The heating rolls 140 are formed in plural numbers between at least two guide rolls 120. At this time, the plurality of heating rolls 140 have a structure continuously arranged between at least two guide rolls 120. Further, the plurality of heating rolls 140 may be arranged so that two heating rolls 140 adjacent to each other come into contact with different surfaces of the electrode 110. Further, in the plurality of heating rolls 140 , two heating rolls 140 adjacent to each other may be alternately arranged adjacent to each other in an upper part and lower part of the chamber 190.

Therefore, the heating roll 140 can transfer heat uniformly to both surfaces of the electrode 110, so that the moisture deviation inside the electrode 110 may be further reduced. Further, such an arrangement structure can increase the time during which the electrode 110 retains on the path set by the plurality of heating rolls 140, whereby the electrode drying device 100 can further reduce the moisture deviation inside the electrode 110.

Further, each heating roll 140 can come into contact with the electrode 110 with a maximum area. In one example, the electrode 110 can come into contact with an area of 25% or more to 75% or less of the total area corresponding to the outer peripheral surface of the heating roll 140. More preferably, the electrode 110 can come into contact with an area of 40% or more to 50% or less of the total area corresponding to the outer peripheral surface of the heating roll 140. When the area in which the heating roll 140 comes into contact with the electrode 110 is less than 25%, the degree to which the heating roll 140 transfers heat to the electrode 110 to induce heating may not be sufficient. Thereby, a part of the electrode 110 may be cooled to the first temperature or less. When the area in which the heating roll 140 comes into contact with the electrode 110 is greater than 75%, a spatial limitation may occur when arranging the plurality of heating rolls 140 within the chamber 190, which may make it difficult to arrange a sufficient number of heating rolls 140.

The heating roll 140 may be heated to a second temperature. The second temperature may be equal to the first temperature, or may be higher than the first temperature. More specifically, the second temperature may be 90 degrees Celsius or more and 150 degrees Celsius or less. Still more preferably, the second temperature may be 95 degrees Celsius or more and 145 degrees Celsius or less. In one example, the second temperature may be 100 degrees Celsius or more and 140 degrees Celsius or less. When the second temperature is less than 90 degrees Celsius, it may be difficult to maintain the temperature of the electrode 110 passing through the heating roll 140 at the first temperature or higher. When the second temperature is greater than 150 degrees Celsius, the electrode slurry contained in the electrode 110 passing through the heating roll 140 may be deteriorated by heat, or at least a part of the electrode 110 may be damaged.

Further, the electrode 110 can move to the first path set by the guide roll 120 and the heating roll 140. More specifically, the first guide roll corresponding to the injection part of the electrode 110 and the second guide roll corresponding to the entry/exit portion of the electrode 110 allow the first path to set the injection and entry/exit positions of the electrode 110. Therefore, the electrode 110 may not be cooled to less than the first temperature on the first path, and thus, the electrode drying device 100 can increase the drying efficiency of the electrode 110 and reduce the moisture deviation inside the electrode 110. Further, as the drying capacity of the electrode drying device 100 is improved, the electrode model capable of performing the drying process can be expanded in various ways.

Moreover, the electrode drying device 100 according to the invention further includes a hot air system 150.

The hot air system 150 may be located in an upper part or lower part of the chamber 190 of the electrode drying device 100. The hot air system 150 is located adjacent to the first path. Further, the hot air system 150 may be arranged spaced apart from the first path by a predetermined distance. Further, the hot air system 150 may extend to a length equal to or longer than the length corresponding to the first path based on the traveling direction D1 of the electrode 110.

Further, the hot air system 150 may supply hot air at a third temperature into the chamber 190 of the electrode drying device 100. That is, the hot air system 150 can maintain the temperature within the chamber 190 of the electrode drying device 100 to be the same as or similar to the third temperature. Therefore, the hot air system 150 may indirectly heat the electrode 110 moving along the first path. Further, the hot air system 150 may indirectly heat a part of the electrode that is not in contact with the heating roll 120. Thereby, in the electrode drying device 100, due to the hot air system 150, the drying time of the electrode 110 is shortened, the drying efficiency of the electrode 110 is increased, and the moisture deviation inside the electrode 110 can be reduced. Further, as the drying capacity of the electrode drying device 100 is further improved, and the electrode model capable of performing the drying process can be expanded in various ways.

As an example, referring to Fig. 2, the hot air system 150 may supply hot air at a third temperature in a direction D2 perpendicular to the traveling direction D1 of the first path. Thereby, the hot air system 150 may uniformly supply hot air of the third temperature to the electrode 110 moving along the first path. Therefore, in the electrode drying device 100, due to the hot air system 150, the drying efficiency of the electrode 110 can be further increased, and moisture deviation inside the electrode 110 can also be further reduced.

The hot air system 150 may supply hot air at a third temperature toward the electrode. The third temperature may be the same as at least one of the first temperature and the second temperature, or may be higher than at least any one of the first temperature and the second temperature. More specifically, the third temperature may be 90 degrees Celsius or more and 150 degrees Celsius or less. More preferably, the third temperature may be 95 degrees Celsius or more and 145 degrees Celsius or less. In one example, the third temperature may be 100 degrees Celsius or more and 140 degrees Celsius or less.

When the third temperature is less than 90 degrees Celsius, it may be difficult to maintain the temperature of the electrode 110 on the first path at the first temperature or higher. When the third temperature is greater than 150 degrees Celsius, the electrode slurry contained in the electrode 110 on the first path may be deteriorated by heat, or at least a part of the electrode 110 may be damaged.

In one example, the hot air system 150 may include a temperature control sensor. Therefore, the hot air system 150 may control the hot air to be supplied to the third temperature via the temperature control sensor.

An electrode assembly according to another embodiment of the present disclosure is manufactured using the electrode drying device. The electrode assembly may be composed of a folding type structure, a stack type structure, a stack/folding type (SNF) structure, or a lamination/stack type (LNS) structure.

In the secondary battery according to another embodiment of the present disclosure, the electrode assembly is sealed inside a battery case together with an electrolytic solution. In addition, a battery pack containing two or more secondary batteries as a unit battery can be provided.

The battery pack can be applied to various devices. Such a device may be applied to a vehicle means such as an electric bicycle, an electric vehicle, or a hybrid vehicle, but the present disclosure is not limited thereto, and is applicable to various devices that can use a battery module, which also belongs to the scope of the present disclosure.

### [Description of Reference Numerals]

100: electrode drying device
110: electrode
120: guide roll
130: heater
140: heating roll
150: hot air system

## Claims

1. An electrode drying device (100) comprising:
an electrode (110);
a guide roll (120) that guides the moving direction of the electrode (110); heating rolls (140) that are arranged spaced apart from the guide roll (120) and
a heater (130) that is located between the guide roll (120) and the heating rolls (140) and heats the electrode (110) to a first temperature,
wherein the heating rolls (140) are heated to a second temperature, and provide a first path through which the electrode (110) moves together with the guide roll (120), and
wherein said electrode drying device is configured so that the electrode (110) heated to the first temperature is maintained at a temperature equal to or higher than the first temperature and lower than the second temperature on the first path;
wherein the second temperature is equal to the first temperature or is higher than the first temperature; and wherein
the first temperature is 90 degrees Celsius or more and 150 degrees Celsius or less, and
the second temperature is 90 degrees Celsius or more and 150 degrees Celsius or less,
**characterized in that**
the guide roll (120) comprises a first guide roll corresponding to an injection portion of the electrode, and a second guide roll corresponding to the entry/exit portion of the electrode (110),
the heating rolls (140) are formed in plural numbers between the first guide roll and the second guide roll, and the plurality of the heating rolls (140) have a structure in which they are continuously arranged, and **in that** said electrode drying device
further comprises a hot air system (150),
wherein the hot air system (150) is arranged adjacent to the first path.

2. The electrode drying device (100) according to claim 1, wherein:
the heater (130) is located between the first guide roll and the heating roll (140) located most adjacent to the first guide roll.

3. The electrode drying device (100) according to claim 1, wherein:
the hot air system (150) comprises a temperature control sensor.

4. The electrode drying device (100) according to claim 1, wherein:
the hot air system (150) supplies hot air at a third temperature toward the electrode (110), and
the third temperature is equal to at least any one of the first temperature and the second temperature, or higher than at least any one of the first temperature and the second temperature.

5. The electrode drying device (100) according to claim 4, wherein:
the third temperature is 90 degrees Celsius or more and 150 degrees Celsius or less.

6. The electrode drying device (100) according to claim 4, wherein:
the hot air system (150) supplies hot air at a third temperature in a direction perpendicular to the traveling direction of the first path.

7. The electrode drying device (100) according to claim 1, wherein:
the heating roll (140) is a contact-type induction heating roll (140).

8. A method of manufacturing an electrode assembly by using the electrode drying device (100) according to any one of claims 1 to 7.

## Patentansprüche

1. Elektrodentrocknungsvorrichtung (100), umfassend:
eine Elektrode (110);
eine Führungsrolle (120), die die Bewegungsrichtung der Elektrode (110) führt;
Heizrollen (140), die von der Führungsrolle (120) beabstandet angeordnet sind, und
eine Heizvorrichtung (130), die sich zwischen der Führungsrolle (120) und den Heizrollen (140) befindet und die Elektrode (110) auf eine erste Temperatur erhitzt,
wobei die Heizrollen (140) auf eine zweite Temperatur erhitzt werden und einen ersten Pfad bereitstellen, durch den sich die Elektrode (110) zusammen mit der Führungsrolle (120) bewegt, und
wobei die Elektrodentrocknungsvorrichtung so konfiguriert ist, dass
die auf die erste Temperatur erhitzte Elektrode (110) auf dem ersten Pfad auf einer Temperatur gehalten wird, die gleich oder höher als die erste Temperatur und niedriger als die zweite Temperatur ist;
wobei die zweite Temperatur gleich der ersten Temperatur oder höher als die erste Temperatur ist; und wobei
die erste Temperatur 90 Grad Celsius oder mehr und 150 Grad Celsius oder weniger beträgt, und
die zweite Temperatur 90 Grad Celsius oder mehr und 150 Grad Celsius oder weniger beträgt,
**dadurch gekennzeichnet, dass**
die Führungsrolle (120) eine erste Führungsrolle, die einem Einspritzabschnitt der Elektrode entspricht, und eine zweite Führungsrolle, die dem Eintritts- /Austrittsabschnitt der Elektrode (110) entspricht, umfasst,
die Heizrollen (140) in einer Mehrzahl zwischen der ersten Führungsrolle und der zweiten Führungsrolle ausgebildet sind, und die Mehrzahl der Heizrollen (140) eine Struktur aufweisen, in der sie kontinuierlich angeordnet sind, und dadurch, dass die Elektrodentrocknungsvorrichtung ferner ein Heißluftsystem (150) umfasst,
wobei das Heißluftsystem (150) benachbart zum ersten Pfad angeordnet ist.

2. Elektrodentrocknungsvorrichtung (100) nach Anspruch 1, wobei:
sich die Heizvorrichtung (130) zwischen der ersten Führungsrolle und der Heizrolle (140) befindet, die der ersten Führungsrolle am nächsten liegt.

3. Elektrodentrocknungsvorrichtung (100) nach Anspruch 1, wobei:
das Heißluftsystem (150) einen Temperaturregelsensor umfasst.

4. Elektrodentrocknungsvorrichtung (100) nach Anspruch 1, wobei:
das Heißluftsystem (150) Heißluft mit einer dritten Temperatur in Richtung der Elektrode (110) zuführt, und
die dritte Temperatur gleich mindestens einer der ersten Temperatur und der zweiten Temperatur oder höher als mindestens eine der ersten Temperatur und der zweiten Temperatur ist.

5. Elektrodentrocknungsvorrichtung (100) nach Anspruch 4, wobei:
die dritte Temperatur 90 Grad Celsius oder mehr und 150 Grad Celsius oder weniger beträgt.

6. Elektrodentrocknungsvorrichtung (100) nach Anspruch 4, wobei:
das Heißluftsystem (150) Heißluft mit einer dritten Temperatur in einer Richtung senkrecht zur Bewegungsrichtung des ersten Pfades zuführt.

7. Elektrodentrocknungsvorrichtung (100) nach Anspruch 1, wobei:
die Heizrolle (140) eine Induktionsheizrolle vom Kontakttyp (140) ist.

8. Verfahren zur Herstellung einer Elektrodenanordnung unter Verwendung der Elektrodentrocknungsvorrichtung (100) nach einem der Ansprüche 1 bis 7.

## Revendications

1. Dispositif de séchage d'électrode (100) comprenant :
une électrode (110) ;
un rouleau de guidage (120) qui guide le sens de déplacement de l'électrode (110) ;
des rouleaux chauffants (140) qui sont agencés à distance du rouleau de guidage (120) et
un dispositif de chauffage (130) qui est situé entre le rouleau de guidage (120) et les rouleaux chauffants (140) et qui chauffe l'électrode (110) à une première température,
dans lequel les rouleaux chauffants (140) sont chauffés à une deuxième température, et fournissent un premier trajet à travers lequel l'électrode (110) se déplace conjointement avec le rouleau de guidage (120), et
dans lequel ledit dispositif de séchage d'électrode est configuré de sorte que
l'électrode (110) chauffée à la première température est maintenue à une température égale ou supérieure à la première température et inférieure à la deuxième température sur le premier trajet ;
dans lequel la deuxième température est égale à la première température ou est supérieure à la première température ; et dans lequel
la première température est de 90 degrés Celsius ou plus et de 150 degrés Celsius ou moins, et
la deuxième température est de 90 degrés Celsius ou plus et de 150 degrés Celsius ou moins,
**caractérisé en ce que**
le rouleau de guidage (120) comprend un premier rouleau de guidage correspondant à une partie d'injection de l'électrode, et un second rouleau de guidage correspondant à la partie d'entrée/sortie de l'électrode (110),
les rouleaux chauffants (140) sont formés en une pluralité entre le premier rouleau de guidage et le second rouleau de guidage, et la pluralité des rouleaux chauffants (140) ont une structure dans laquelle ils sont agencés en continu, et **en ce que** ledit dispositif de séchage d'électrode comprend en outre un système à air chaud (150),
dans lequel le système à air chaud (150) est agencé de manière adjacente au premier trajet.

2. Le dispositif de séchage d'électrode (100) selon la revendication 1, dans lequel:
le dispositif de chauffage (130) est situé entre le premier rouleau de guidage et le rouleau chauffant (140) situé le plus près du premier rouleau de guidage.

3. Le dispositif de séchage d'électrode (100) selon la revendication 1, dans lequel:
le système à air chaud (150) comprend un capteur de régulation de température.

4. Le dispositif de séchage d'électrode (100) selon la revendication 1, dans lequel:
le système à air chaud (150) fournit de l'air chaud à une troisième température vers l'électrode (110), et
la troisième température est égale à au moins l'une de la première température et de la deuxième température, ou supérieure à au moins l'une de la première température et de la deuxième température.

5. Le dispositif de séchage d'électrode (100) selon la revendication 4, dans lequel:
la troisième température est de 90 degrés Celsius ou plus et de 150 degrés Celsius ou moins.

6. Le dispositif de séchage d'électrode (100) selon la revendication 4, dans lequel:
le système à air chaud (150) fournit de l'air chaud à une troisième température dans une direction perpendiculaire au sens de déplacement du premier trajet.

7. Le dispositif de séchage d'électrode (100) selon la revendication 1, dans lequel:
le rouleau chauffant (140) est un rouleau chauffant par induction de type à contact (140).

8. Procédé de fabrication d'un ensemble d'électrodes en utilisant le dispositif de séchage d'électrode (100) selon l'une quelconque des revendications 1 à 7.
